# EUROPEAN PATENT APPLICATION

(11) **EP 2 845 790 A1**
(43) Date of publication of application: **11.03.2015**
(21) Application number: 14003122.0
(22) Date of filing: 10.09.2014
(51) Int. Cl.: B62M 6/85

(54) **Solar powered battery charger bicycle casewith socket for accessories**

(30) Priority: 10.09.2013 IT RN20130029
(71) Applicant: Betti, Fabio, 47922 Rimini (RN) (IT)
(72) Inventor: Betti, Fabio, 47922 Rimini (RN) (IT)
(74) Representative: Montebelli, Marco

(57) **Abstract**

Independent equipment for supplying low voltage electricity to non-motorized locomotion means (b) comprises a battery (5) for storing electricity, a photovoltaic system (3), designed to power the battery (5), and a socket (6), designed to allow the equipment (10) to be associated with a user device (u).

## Description

The invention relates to independent equipment for supplying low voltage electricity, applicable to non-motorized locomotion means.

In recent years there has been an increase in the use of non-motorized locomotion means (bicycle, buggy, tandem, electric bicycle), with a reduction in the use of motorized locomotion means, in particular in towns, both for economic and practical reasons. In fact, bicycles are more versatile locomotion means than motor cars, above all for running errands, a little shopping, in particular in towns which are increasingly congested and from which motor vehicles are increasingly banned.

One of the problems that has to be faced when getting around in town using locomotion means such as bicycles is that of the limited autonomy of mobile telephones, iPads and laptops.

Whilst in motor vehicles there is always the possibility of connecting to the electrical system using the cigarette lighter socket, in bicycles that is not possible, since bicycles are not normally equipped with an electrical system. And even if they were, such as electric bicycles, the power contained in the batteries is limited by the possibility of recharging them only by connecting the bicycle to the mains network.

The level of prior art is such that it provides material useful to making this invention. The particular application has for an aim to improve the use of bicycles by providing them with convenient features not yet present on the market, such as a low voltage electrical system powered by photovoltaic energy.

Therefore, for improved use of non-motorized locomotion means, whether a bicycle, buggy, tandem or electric bicycle, one requirement, whether being used for an outing, but above all if used in town, as an alternative to a motor car, is to equip the locomotion means with a system able to supply electricity for various uses, such as charging a mobile phone, powering a computer, etc.

Such a type of system is of greater value if it can be recharged independently. To meet this need, this utility model proposes to solve the problem by equipping the locomotion means with a photovoltaic panel sized to keep charged the battery which powers said system.

The problems which the invention aims to solve are therefore that of equipping non-motorized locomotion means, such as bicycles, buggies, tandems, with an independent system for supplying low voltage electricity (max. 12V), available for the most diverse uses, such as charging a telephone, an iPad, a smartphone, powering a laptop, powering a portable refrigerator; and making the electrical system in question independent, recharging it using a system for receiving solar energy with photovoltaic panels mounted on the locomotion means.

At present there is nothing on the market which allows the possibility of recharging batteries using solar energy when getting around on a bicycle, but the industrial and economic potential of such equipment will be considerable, above all in view of the fact that locomotion means such as the bicycle will be further preferred to the motor car for getting around, particularly in town. The system invented is such that it allows application on every type of bicycle, since it can be made in a kit to be mounted on existing front or rear parcel racks, or it can be made together with the whole parcel rack (front or rear of the bicycle).

Further advantages and features of the invention are more apparent in the detailed description which follows, with reference to the accompanying drawings, which illustrate an example embodiment of it without limiting the scope of the invention, in which:
- Figure 1 is a side view of a first version of the invention;
- Figure 2 is a rear face view of the invention of Figure 1;
- Figure 3 is a schematic side view of the invention, with some parts cut away to better illustrate others;

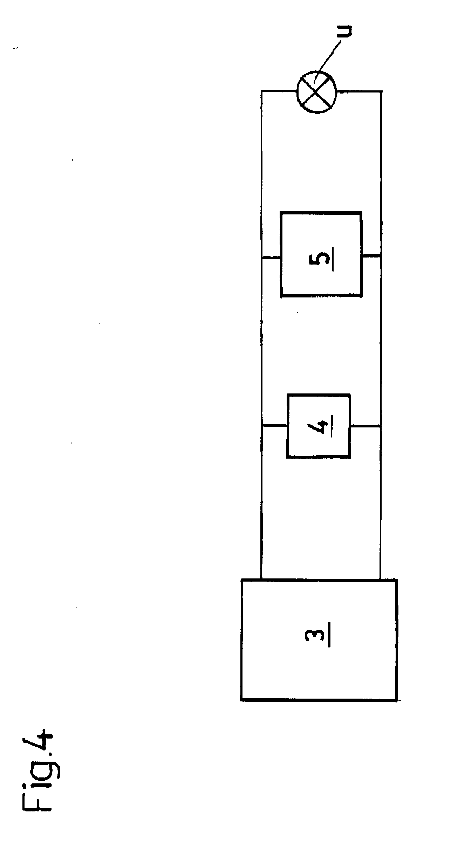

- Figure 4 is a wiring diagram of the invention. The invention consists of independent equipment for supplying low voltage electricity to non-motorized locomotion means. It comprises a battery 5 for storing electricity, a photovoltaic system 3, designed to receive solar energy, consisting of a plurality of photovoltaic panels 31, which powers the battery 5, a charge regulator 4, a use system consisting of a socket 6, which allows the equipment to be associated with a user device u, and electrical connection means 7, designed to connect the battery 5, the photovoltaic system 3 and the socket 6.

The battery 5 stores energy equal to at least 50 watt-hours, so as to supply power for a prolonged period of time. In a preferred embodiment, the battery 5 stores energy equal to at least 100 watt-hours.

The charge regulator 4 allows definition of the current supplied to the battery 5, in such a way that it is always within an acceptable range irrespective of the weather conditions.

The socket 6 may be a typical 12 Volt socket with plug, such as the type used in motor cars, and/or alternatively it may be a universal connector for electronic devices, such as a USB key.

Figure 4 shows a general wiring diagram of the invention, in one of its possible embodiments.

All of this can be integrated with a front or rear parcel rack 1 of a bicycle or other locomotion means b.

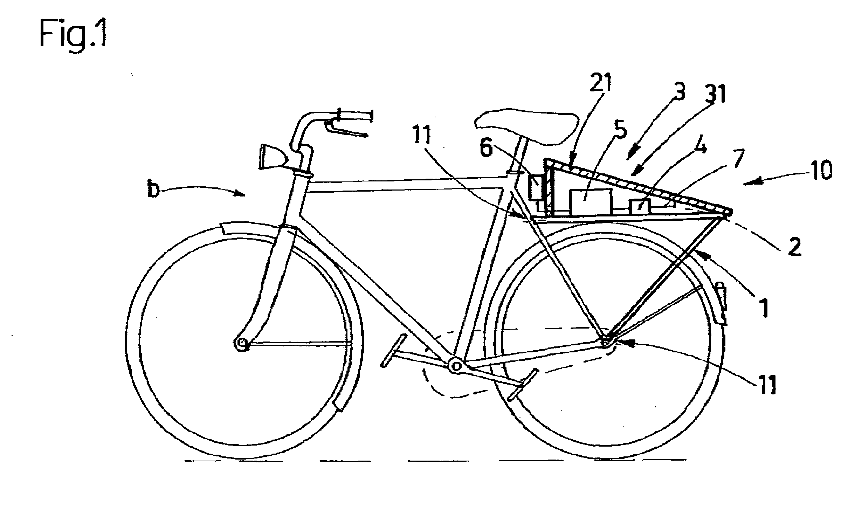

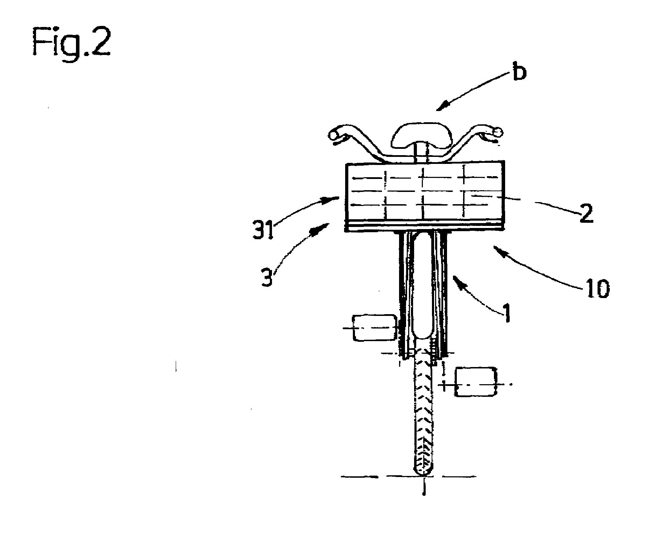

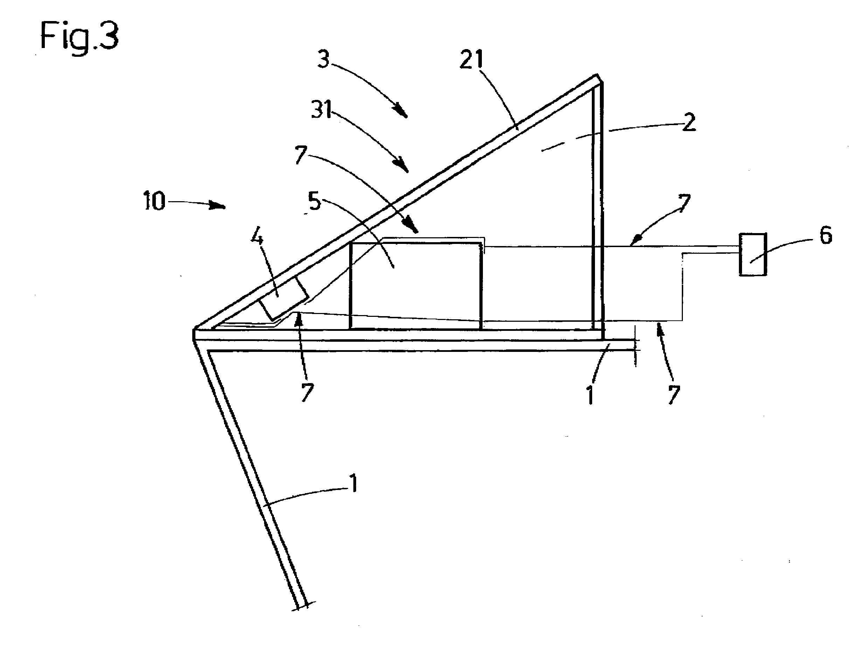

In that case, as shown in Figures 1 to 3, the equipment 10 comprises a container 2, in which the battery 5, the charge regulator 4, and the electrical connection means 7 are located. The container 2 is provided with a lid 21, in which the photovoltaic system 3 is integrated, consisting of at least one single or modular panel 31. Below the container, the parcel rack 1 is provided with constraining means 11 which allow direct joining to the locomotion means b.

## Claims

1. Independent equipment for supplying low voltage electricity to non-motorized locomotion means (b), **characterised in that** it comprises a battery (5) for storing electricity, a photovoltaic system (3), designed to power the battery (5), a socket (6), designed to allow the equipment to be associated with a user device (u), and electrical connection means (7), designed to connect the battery (5), the photovoltaic system (3) and the socket (6).

2. The equipment according to claim 1, **characterised in that** it comprises a container (2), constrainable to the locomotion means (b), provided with a lid (21), in which the photovoltaic system (3) is integrated, consisting of a plurality of panels (31), designed to contain the battery (5) and the electrical connection means (7).

3. The apparatus according to claim 1, **characterised in that** the battery (5) stores energy equal to at least 50 watt-hours, in such a way as to supply power for a prolonged period of time.

4. The apparatus according to claim 1, **characterised in that** the battery (5) stores energy equal to at least 100 watt-hours, in such a way as to supply power for a prolonged period of time.

5. The apparatus according to claim 2, **characterised in that** it comprises an integrated parcel rack (1), supporting the container (2) and provided with constraining means (11) for constraining to the locomotion means (b).

6. The equipment according to claim 1, **characterised in that** it comprises a socket (6) of the USB type for the cables of computers and electronic devices.

7. The equipment according to claim 1, **characterised in that** it comprises a charge regulator (4), designed to define a range of values of the battery (5) power supply current.
